# EUROPEAN PATENT APPLICATION

(11) **EP 4 783 010 A1**
(43) Date of publication of application: **29.07.2026**
(21) Application number: 26151050.7
(22) Date of filing: 09.01.2026
(51) Int. Cl.: G06F 11/10

(54) **STORAGE CONTROLLER, STORAGE SYSTEM, AND METHOD FOR RECOVERING DATA IN HOST MEMORY BUFFER**

(30) Priority: 24.01.2025 KR 20250011898
(71) Applicant: Samsung Electronics Co., Ltd., Suwon-si, Gyeonggi-do 16677 (KR)
(72) Inventor: PARK, Seonwoo, 16677 Suwon-si (KR); CHANG, Hoyoung, 16677 Suwon-si (KR); LEE, Dongryoul, 16677 Suwon-si (KR); KIM, Jinsu, 16677 Suwon-si (KR)
(74) Representative: Marks & Clerk LLP

(57) **Abstract**

A storage system comprises a memory device including a host memory buffer, and a storage device including a non-volatile memory device and a storage controller configured to manage the host memory buffer and the non-volatile memory device. The storage controller is configured to read a codeword including first data from the host memory buffer, perform an error detection operation and an error correction operation on the first data, read a plurality of first codewords each including data included in subset data and a codeword including first RAID parity data from the host memory buffer, based on an error of the first data not being corrected, and recover the first data, based on the first RAID parity data and the subset data, wherein the subset data includes data used along with the first data to generate the first RAID parity data.

## Description

### BACKGROUND

Semiconductor memories are categorized into volatile memory devices, where stored data is deleted when the supply of power thereto is cut off like static random access memory (RAM) (SRAM) and dynamic RAM (DRAM), and non-volatile memory devices which maintain stored data even when the supply of power thereto is cut off like phase RAM (PRAM), magnetic RAM (MRAM), resistive RAM (RRAM), and ferroelectric RAM (FRAM).

As multiple users use various electronic devices to generate a large amount of data, a number of resources are needed for managing data in a storage device. For example, when the amount of data increases, the amount of metadata associated with the data may increase, and thus, a memory having a sufficient capacity may be desired for buffering data and metadata.

However, due to various issues such as the cost, a device size, and a design limitation, it may be difficult to implement a storage device having sufficient resources. In this context, it may be favorable to use residual resources so as to provide sufficient resources for storage devices.

### SUMMARY

This disclosure provides a storage controller, a storage system, and an operating method of the storage system, in which reliability is enhanced.

According to some implementations there is provided a storage system comprising a memory device including a host memory buffer and a storage device including a non-volatile memory device and a storage controller configured to manage the host memory buffer and the non-volatile memory device, wherein the storage controller is configured to read a codeword including first data from the host memory buffer, perform an error detection operation and an error correction operation on the first data, read a plurality of first codewords each including data included in subset data and a codeword including first RAID (redundant array of independent disks) parity data from the host memory buffer, based on an error of the first data not being corrected, and recover the first data, based on the first RAID parity data and the subset data, wherein the subset data includes data used along with the first data so as to generate the first RAID parity data.

According to some implementations there is provided an operating method of a storage system, the storage system including a host memory buffer and a storage device, the storage device including a storage controller and a non-volatile memory device, and the operating method comprising reading, using the storage controller, a codeword including first data from the host memory buffer, performing, using the storage controller, an error detection operation and an error correction operation, determining, using the storage controller, whether the first data includes an error uncorrectable through the error correction operation, reading, using the storage controller, a first redundant array of independent disks (RAID) codeword including first RAID parity data and a plurality of first codewords respectively including pieces of data included in subset data from the host memory buffer, based on the first data including an uncorrectable error, and recovering, by the storage controller, the first data based on the first RAID parity data and the subset data, wherein the subset data includes data used along with the first data so as to generate the first RAID parity data.

An operating method of a storage controller according to some implementations includes reading a codeword including first data from an external host memory buffer, performing an error detection operation and an error correction operation on the first data, determining whether the first data includes an error uncorrectable through the error correction operation, reading a first redundant array of independent disks (RAID) codeword including first RAID parity data and a plurality of first codewords respectively including pieces of data included in subset data from the external host memory buffer, based on the first data including an uncorrectable error, and recovering the first data based on the first RAID parity data and the subset data, wherein the subset data includes data used along with the first data so as to generate the first RAID parity data.

At least some of the above and other features of the invention are set out in the claims.

### BRIEF DESCRIPTION OF THE DRAWINGS

Implementations will be more clearly understood from the following detailed description taken in conjunction with the accompanying drawings in which:
FIG. 1 is a block diagram illustrating a storage system according to some implementations;
FIG. 2 is a block diagram illustrating in more detail a host memory buffer (HMB) controller of the storage system of FIG. 1 according to some implementations;
FIG. 3 is a diagram for describing an HMB of FIG. 1 according to some implementations;
FIG. 4 is a flowchart illustrating an example of an operating method of the HMB controller of the storage system of FIG. 1 according to some implementations;
FIG. 5 is a diagram for describing an operation of the storage system of FIG. 1 according to some implementations;
FIG. 6 is a flowchart illustrating an example of an operating method of the storage system of FIG. 1 according to some implementations;
FIG. 7 is a flowchart illustrating an example of an operating method of the HMB controller of the storage system of FIG. 1 according to some implementations;
FIGS. 8A and 8B are diagrams for describing an operation of the storage system of FIG. 1 according to some implementations;
FIG. 9 is a flowchart illustrating an example of an operating method of the storage system of FIG. 1 according to some implementations;
FIG. 10 is a flowchart illustrating an example of an operating method of the HMB controller of the storage system of FIG. 1 according to some implementations;
FIGS. 11A and 11B are diagrams for describing an operation of the storage system of FIG. 1 according to some implementations;
FIG. 12 is a flowchart illustrating an example of an operating method of the storage system of FIG. 1 according to some implementations;
FIG. 13 is a diagram for describing an operation of a storage device of the storage system of FIG. 1 according to some implementations;
FIG. 14 is a flowchart illustrating an example of an operating method of the HMB controller of the storage system of FIG. 1 according to some implementations; and
FIG. 15 is a diagram illustrating a system according to some implementations.

### DETAILED DESCRIPTION

Hereinafter, implementations will be described in detail with reference to the accompanying drawings.

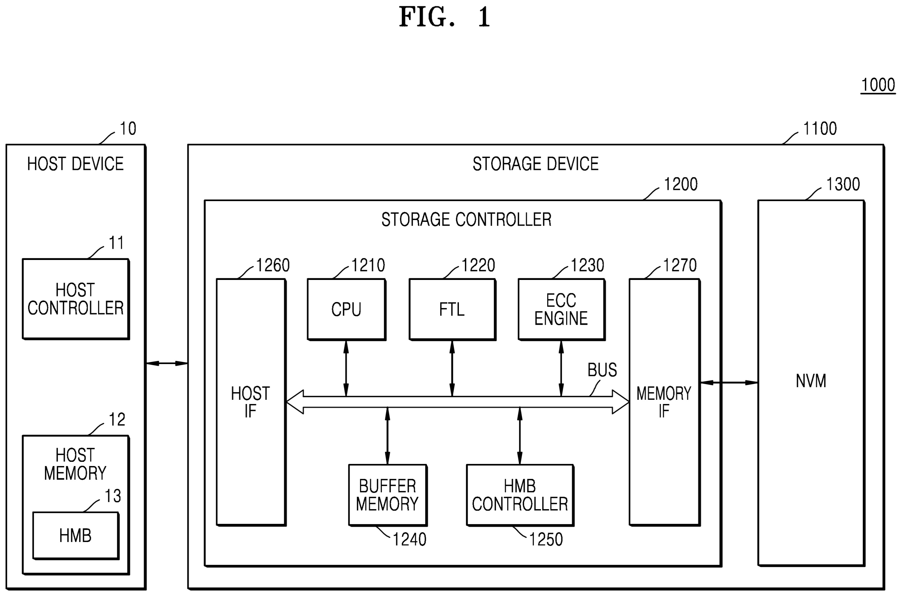

FIG. 1 is a block diagram illustrating a storage system 1000 according to some implementations.

Referring to FIG. 1, the storage system 1000 may include a host device 10 and a storage device 1100. The storage system 1000, for example, may be implemented with an electronic device such as a personal computer (PC), a laptop computer, a mobile phone, a smartphone, a tablet PC, a personal digital assistant (PDA), an enterprise digital assistant (EDA), a digital still camera, a digital video camera, an audio device, a portable multimedia player (PMP), a personal navigation device (or portable navigation device) (PND), an MP3 player, a handheld game console, or an e-book.

The host device 10 may control a data processing operation (for example, a data read operation or a data write operation) on the storage device 1100. The host device 10 may denote a data processing device for processing data like a central processing unit (CPU), a processor, a microprocessor, or an application processor (AP). The host device 10 may perform, run or execute an operating system (OS) and/or various applications.

In detail, the host device 10 may include a host controller 11 and a host memory 12. The host controller 11 may be a device configured to control the overall operation of the host device 10, or control the storage device 1100 at the host device 10 side. The host controller 11 may execute instructions stored in the host memory 12. The host memory 12 may be a buffer memory, a cache memory, or a working memory, which is used in the host device 10. Various software or data driven in the host device 10 may be loaded into the host memory 12. The host memory 12 may store one or more instructions.

In some implementations, the host memory 12 may function as a buffer memory for temporarily storing data transferred from the storage device 1100 or data which is to be transferred to the storage device 1100. The host device 10 may transfer a request to the storage device 1100 and may receive a response from the storage device 1100. For example, when the request is a write request, the request may include write data. For example, when the request is a read request, the request may include read data.

In some implementations, the host device 10 may allocate a partial region of the host memory 12 as a buffer of the storage device 1100. Hereinafter, the partial region of the host memory 12 allocated as the buffer of the storage device 1100 may be referred to as a host memory buffer (HMB) 13.

The storage device 1100 may operate based on control by the host device 10. The storage device 1100 may include a storage controller 1200 and a non-volatile memory device 1300. The storage controller 1200 may manage the non-volatile memory device 1300. The storage controller 1200 may perform various management operations for efficiently using the non-volatile memory device 1300. The non-volatile memory device 1300 may include a plurality of non-volatile memories. The storage controller 1200 may manage the HMB 13.

The storage device 1100 may receive a request REQ from the host device 10 and may transfer a response RSP to the host device 10. For example, when the request REQ is a write request, the storage controller 1200 may control the non-volatile memory device 1300 to write data in the non-volatile memory device 1300, in response to the write request from the host device 10. For example, when the request REQ is a read request, the storage controller 1200 may control the non-volatile memory device 1300 to read data stored in the non-volatile memory device 1300, in response to the read request from the host device 10.

When the non-volatile memory device 1300 includes flash memory, the flash memory may include a two-dimensional (2D) NAND memory array of a three-dimensional (3D) (or vertical) NAND (VNAND) memory array. As another example, the storage device 1100 may include various different kinds of non-volatile memories. For example, magnetic random access memory (RAM) (MRAM), spin-transfer torque MRAM (STT-MRAM), conductive bridging RAM (CBRAM), ferroelectric RAM (FeRAM), phase change RAM (PRAM), resistive RAM (RRAM), and other various kinds of memories may be applied to the storage device 1100.

The storage controller 1200 may include a CPU 1210, a flash translation layer (FTL) 1220, an error correction code (ECC) engine 1230, a buffer memory 1240, an HMB controller 1250, a host interface circuit 1260, and a non-volatile memory interface circuit 1270. The HMB controller 1250 may include hardware, software, or a combination thereof, which is configured to manage the HMB 13.

The storage controller 1200 may further include a working memory into which the FTL 1220 is loaded, and the CPU 1210 may execute the FTL 1220 to control a data write operation and a data read operation on the non-volatile memory device 1300.

In some implementations, the CPU 1210 may be implemented as a multi-core processor, and for example, may be implemented as a dual-core processor or a quad-core processor. The CPU 1210 may execute instructions, which are to be stored in the working memory or the buffer memory 1240. The FTL 1220 may be loaded into the working memory of the storage controller 1200. For example, the working memory may be implemented as a volatile memory such as static RAM (SRAM) or dynamic RAM (DRAM) or a non-volatile memory such as flash memory or PRAM. The working memory may store one or more instructions.

The FTL 1220 may perform various functions such as address mapping, wear-leveling, and garbage collection. An address mapping operation may be an operation of changing a logical address, received from the host device 10, to a physical address, which is used to actually store data in the non-volatile memory device 1300. Wear-leveling may be technology for allowing blocks of the non-volatile memory device 1300 to be uniformly used to prevent excessive degradation in a certain block, and for example, may be implemented through firmware technology, which performs balancing of erase counts of physical blocks. Garbage collection may be technology which copies valid data of a block to a new block, and then, erases a previous block, thereby securing an available capacity in the non-volatile memory device 1300.

The buffer memory 1240 may be configured to temporarily store write data received from the host device 10 or data read from the non-volatile memory device 1300, based on control by the storage controller 1200. Hereinafter, the buffer memory 1240 may be assumed to be SRAM. However, this disclosure is not limited thereto. For example, the buffer memory 1240 may include high-speed RAM such as DRAM or SRAM. Alternatively, the buffer memory 1240 may include a non-volatile memory such as read-only memory (ROM), programmable read-only memory (PROM), erasable programmable read-only memory (EPROM), electrically erasable programmable read-only memory (EEPROM), a flash memory device, PRAM, MRAM, RRAM, FeRAM, or thyristor RAM (TRAM).

The ECC engine 1230 may perform an error detection and correction function on read data read from the non-volatile memory device 1300. In more detail, the ECC engine 1230 may generate parity bits on write data which is to be written in the non-volatile memory device 1300, and thus, the generated parity bits may be stored in the non-volatile memory device 1300 along with the write data. In reading data from the non-volatile memory device 1300, the ECC engine 1230 may correct an error in read data by using the parity bits read from the non-volatile memory device 1300 along with the read data and may output error-corrected read data.

The host interface circuit 1260 may transfer a packet to, or receive a packet from, the host device 10. The packet transferred from the host device 10 to the host interface circuit 1260 may include a command, a request RQ, or data which is to be written in the non-volatile memory device 1300, and a packet transferred from the host interface circuit 1260 to the host device 10 may include a response to a command or data read from the non-volatile memory device 1300.

The non-volatile memory interface circuit 1270 may transfer data, which is to be written in the non-volatile memory device 1300, to the non-volatile memory device 1300, or may receive data read from the non-volatile memory device 1300. The non-volatile memory interface circuit 1270 may be implemented to comply with a standard such as Toggle or open NAND flash interface (ONFI).

The HMB controller 1250 may manage the HMB 13. The HMB controller 1250 may store and manage various data by using the HMB 13 as a buffer. The HMB controller 1250 may store encoded data (or a codeword) in the HMB 13, for the reliability or security of data. For example, the codeword may include data and a parity. For example, the parity may include at least one of an ECC parity and cyclic redundancy check. The HMB controller 1250 may store the codeword in the HMB 13.

The HMB controller 1250 may perform an encoding operation on data which is to be stored in the HMB 13. The HMB controller 1250 may generate the codeword through the encoding operation and may store the codeword in the HMB 13.

The HMB controller 1250 may perform a decoding operation on data (i.e., codeword) read from the HMB 13. The HMB controller 1250 may perform an error detection operation and an error correction operation. For example, the error detection operation and the error correction operation may represent an ECC decoding operation or a CRC decoding operation. The error detection operation may represent an operation of detecting an error of data, based on the ECC parity. The error correction operation may represent an operation of correcting an error of data in the HMB 13, based on the ECC parity.

In some implementations, the HMB controller 1250 may perform a stripe write operation. The stripe write operation may generate RAID (redundant array of independent disks) parity data of pieces of data which are to be stored in the HMB 13 and may represent an operation of storing the pieces of data and the RAID parity data in the HMB 13. The HMB controller 1250 may generate the RAID parity data of data which is to be stored in the HMB 13. For example, the HMB controller 1250 may generate fourth RAID parity data of the pieces of data. The HMB controller 1250 may store the pieces of data and the fourth RAID parity data in the HMB 13.

In some implementations, the HMB controller 1250 may perform a RAID recovery operation. When an error is not corrected through a decoding operation on data (for example, a codeword including first data) read from the HMB 13, the HMB controller 1250 may perform the RAID recovery operation. When the first data includes an error incapable of being corrected through the error correction operation, the HMB controller 1250 may perform the RAID recovery operation. The HMB controller 1250 may recover first data, based on first RAID parity data and subset data. For example, the first RAID parity data may represent RAID parity data corresponding to the first data stored in the HMB 13. The subset data may represent data used along with the first data, so as to generate the first RAID parity data. A chunk may include the first data and the subset data. The chunk may represent total data used for generating RAID parity data. A stripe may include a chunk and RAID parity data.

In some implementations, the HMB controller 1250 may perform an HMB data updating operation. The HMB data updating operation may represent an operation of updating data (for example, second data) stored in the HMB 13. The HMB controller 1250 may read the second data and second RAID parity data from the HMB 13. The HMB controller 1250 may generate third RAID parity data, based on the second data, the second RAID parity data, and updated data (for example, third data). The HMB controller 1250 may store the third data and third RAID parity data in the HMB 13. Accordingly, when an error occurs in data stored in the HMB 13, the HMB controller 1250 may recover the data using the updated parity data. In some implementations, even when a UECC occurs in the HMB 13, the HMB controller 1250 may recover the data without reading from the NAND memory device. As a result, a recovery operation time may be reduced, and an overall recovery latency may be improved.

In some implementations, the HMB controller 1250 may divide the HMB 13 into a plurality of regions to manage the HMB 13, based on HMB allocation information provided from the host device 10. The HMB controller 1250 may determine a RAID scheme in each of the plurality of regions. The HMB controller 1250 may determine a RAID scheme based on a type of data (for example, HMB data) stored in a corresponding region. For example, the HMB controller 1250 may set a RAID scheme, based on a type-based reliability level and security level of data. For example, a RAID scheme may represent at least one of a RAID parity data generating method, the size of a stripe, the size of a chunk, the size of unit data, and the size of RAID parity data.

As described above, the storage controller 1200 may generate RAID parity data of data which is to be stored in the HMB 13. The storage controller 1200 may store data and RAID parity data in the HMB 13. When the data read from the HMB 13 includes an error incapable of being corrected through a decoding operation (i.e., an error correction operation), the storage controller 1200 may perform a RAID recovery operation. Therefore, instead of recovering metadata through a journal stored in the non-volatile memory device 1300, the HMB controller 1250 may autonomously recover data based on the RAID parity data. A recovery time may be shortened. Accordingly, the storage device 1100 and the storage system 1000 each having enhanced reliability and performance may be provided.

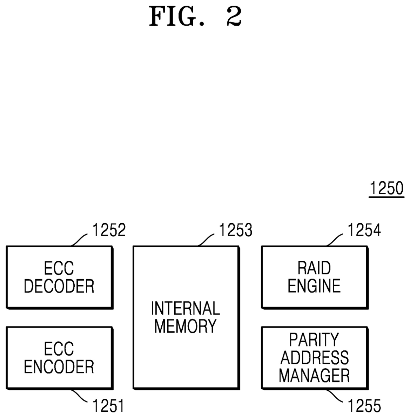

FIG. 2 is a block diagram illustrating in more detail the HMB controller 1250 of FIG. 1 according to some implementations.

Referring to FIGS. 1 and 2, the HMB controller 1250 may include an ECC encoder 1251, an ECC decoder 1252, an internal memory 1253, a RAID engine 1254, and a parity address manager 1255.

In some implementations, the HMB controller 1250 may use the HMB 13 as a buffer. The HMB controller 1250 may manage the HMB 13. The HMB controller 1250 may store data of the storage device 1100 in the HMB 13. For example, the HMB controller 1250 may store user data, metadata, map data, or a mapping table of the storage device 1100 in the HMB 13. For example, the mapping table or the map data may include mapping information between a logical address from the host device 10 and a physical address of the storage device 1100.

In some implementations, the storage controller 1200 may manage data stored in the non-volatile memory device by using the map data. The map data may include information about a correlation between the logical address (or logical block address) managed by the host device 10 and the physical address (or physical block address) of the non-volatile memory device 1300.

As the capacity of the non-volatile memory device 1300 increases, the size of desired map data may increase. Because the capacity of the buffer memory 1240 included in the storage device 1100 is limited, there may be a problem where it is unable to respond to an increase in size of the map data caused by an increase in capacity of the non-volatile memory device 1300. Alternatively, the storage device 1100 may not include a separate memory for storing or managing the map data. A storage device (for example, DRAMLESS SSD) may store total map data of a non-volatile memory device included in the storage device and may load some map data into an SRAM buffer to use the map data. In this case, in order to load map data, access to a non-volatile memory device having an operation speed which is relatively slower than a DRAM buffer may be frequently performed, and due to this, there may be a problem where operation performance is degraded.

In some implementations, the storage device 1100 may need an external buffer memory for storing or managing map data (or metadata). The storage device 1100 may use the HMB 13 as a buffer memory of the storage device 1100. The storage device 1100 may store map data (or mapping table), managed by the storage controller 1200, in the HMB 13.

The ECC encoder 1251 may perform an encoding operation. The ECC encoder 1251 may perform an encoding operation on data (or HMB data) which is to be stored in the HMB 13. For example, the HMB data may include at least one of user data, metadata, map data, and a mapping table. The ECC encoder 1251 may receive HMB data and RAID parity data. For example, the ECC encoder 1251 may receive the HMB data or the RAID parity data from the internal memory 1253 or the RAID engine 1254. The ECC encoder 1251 may perform an encoding operation to generate a parity. The ECC encoder 1251 may generate a codeword including a parity and data.

In some implementations, the ECC encoder 1251 may output the HMB data and the parity to the HMB 13. For example, the ECC encoder 1251 may perform an encoding operation on data (i.e., HMB data) which is to be stored in the HMB 13 and may thus generate a parity corresponding to the HMB data. The ECC encoder 1251 may output the HMB data and the parity, corresponding to the HMB data, to the HMB 13. The ECC encoder 1251 may generate a codeword including the parity and the HMB data and may output the codeword to the HMB 13.

For example, the ECC encoder 1251 may perform an encoding operation on RAID parity data to generate a parity corresponding to the RAID parity data. The ECC encoder 1251 may output the RAID parity data and the parity, corresponding to the RAID parity data, to the HMB 13. The ECC encoder 1251 may generate a codeword including the parity and the RAID parity data and may output the codeword to the HMB 13.

The ECC decoder 1252 may perform an error detection operation and may perform an error correction operation. In some implementations, the ECC decoder 1252 may perform a decoding operation. The ECC decoder 1252 may receive encoded data (i.e., codeword) from the HMB 13. The ECC decoder 1252 may perform a decoding operation on data (i.e., codeword) read from the HMB 13. The ECC decoder 1252 may perform a decoding operation to detect and correct an error. The ECC decoder 1252 may perform a decoding operation based on the parity. For example, the ECC decoder 1252 may perform a decoding operation, based on the codeword including the HMB data. The ECC decoder 1252 may detect and correct an error based on the parity corresponding to the HMB data. The ECC decoder 1252 may perform a decoding operation based on the codeword including the RAID parity data. The ECC decoder 1252 may detect and correct the error based on the parity corresponding to the RAID parity data. In some implementations, the ECC decoder 1252 may transfer decoded data or corrected data to the RAID engine 1254. The ECC decoder 1252 may transfer the decoded data, obtained by removing the parity from the encoded data (i.e., codeword), to the RAID engine 1254. The ECC decoder 1252 may transfer data, obtained through correction based on the parity, to the RAID engine 1254.

In some implementations, the ECC decoder 1252 may correct the error by using cyclic redundancy check (CRC), soft decoding, low density parity check (LDPC) code, block control header (BCH) code, turbo code, Reed-Solomon code, convolution code, recursive systematic code (RSC), trellis-coded modulation (TCM), coded modulation such as block coded modulation (BCM), or other various schemes.

The ECC decoder 1252 may have a predetermined error correction capability. When the HMB data read from the HMB 13 includes an error exceeding an error correction capability of the ECC decoder 1252, the ECC decoder 1252 fails to correct the error of the HMB data. Such data may be referred to as "uncorrectable error correction code (UECC) data", and the error may be repaired through a RAID recovery operation. Hereinafter, the "UECC data" may represent data including an error uncorrectable by the ECC decoder 1252. For example, when the HMB data read from the HMB 13 includes a 1-bit error, the ECC decoder 1252 may correct the error of the HMB data. When the HMB data read from the HMB 13 includes an error of 2 or more bits (or multi-bit), the ECC decoder 1252 may not correct the error of the HMB data.

In some implementations, the RAID engine 1254 may be configured to generate RAID parity data of data which is to be stored in the HMB 13. For example, pieces of data may be stored in the HMB 13. In this case, the pieces of data may configure one chunk. The RAID engine 1254 may perform an XOR operation on pieces of data included in one chunk to generate RAID parity data of the one chunk. A stripe may include one chunk (i.e., pieces of data) and RAID parity data.

In some implementations, the RAID engine 1254 may perform a RAID recovery operation on data (i.e., first data) including an error uncorrectable by the ECC decoder 1252. The RAID engine 1254 may recover the first data, based on the RAID parity data and subset data.

In some implementations, when second data is updated to third data, the RAID engine 1254 may generate third RAID parity data. The RAID engine 1254 may receive the second data and second RAID parity data corresponding to the second data from the HMB 13. The RAID engine 1254 may generate new RAID parity data (i.e., third RAID parity data) of updated data (i.e., third data). The RAID engine 1254 may perform an arithmetic operation on the new RAID parity data (i.e., third RAID parity data), based on the second data, the second RAID parity data, and the updated data (i.e., third data). The RAID engine 1254 may perform an XOR operation on the second data, the second RAID parity data, and the third data to generate third RAID parity data.

The internal memory 1253 may store data read from the HMB 13. The internal memory 1253 may temporarily store data read from the HMB 13 or a portion of the data. In some implementations, the internal memory 1253 may store a portion of a mapping table (or mapping table cache) or map data read from the HMB 13. For example, the HMB controller 1250 may read a codeword including the first data from the HMB 13. The HMB controller 1250 may perform a decoding operation based on the codeword to generate HMB data. The HMB controller 1250 may store the HMB data in the internal memory 1253.

The internal memory 1253 may store data and RAID parity data. In some implementations, the HMB controller 1250 may store the data and the RAID parity data in the HMB 13 in response to a write request. The HMB controller 1250 may previously transfer a write response before storing the data and the RAID parity data in the HMB 13. The HMB controller 1250 may store the data and the RAID parity data in the internal memory 1253 and may transfer the write response. The HMB controller 1250 may transfer the write response, and then, may store the data and the RAID parity data in the HMB 13. Therefore, an increase in latency caused by writing data in the HMB 13 may be prevented. The storage device 1100 having enhanced performance may be provided.

In some implementations, the HMB controller 1250 may store the data and the RAID parity data in the internal memory 1253, based on an operation (or mode). For example, the HMB controller 1250 may store the codeword or the data (or RAID parity data), received from the HMB 13, in the internal memory 1253 in the middle of a RAID recovery operation. The HMB controller 1250 may store recovered data in the internal memory 1253 in the middle of the RAID recovery operation.

For example, the HMB controller 1250 may store the codeword or the data (or RAID parity data), received from the HMB 13, in the internal memory 1253 in the middle of an HMB data updating operation. The HMB controller 1250 may store the codeword or the data (or RAID parity data), which is to be stored in the HMB 13, in the internal memory 1253 in the middle of an HMB data updating operation. The HMB controller 1250 may store updated data or updated RAID parity data in the internal memory 1253 in the middle of the HMB data updating operation. For example, the HMB controller 1250 may store the codeword or the data (or RAID parity data), which is to be stored in the HMB 13, in the internal memory 1253 in the middle of a stripe write operation.

In some implementations, the parity address manager 1255 may manage an address of the RAID parity data. In some implementations, the parity address manager 1255 may provide an address of RAID parity data needed for a RAID recovery operation. For example, the parity address manager 1255 may provide an address of the first RAID parity data corresponding to the first data. In some implementations, the parity address manager 1255 may provide an address of RAID parity data needed for the HMB data updating operation. For example, the parity address manager 1255 may provide an address of the second RAID parity data so as to read the second RAID parity data corresponding to the second data. In some implementations, the parity address manager 1255 may provide an address of RAID parity data needed for the stripe write operation. For example, the parity address manager 1255 may provide an address where a fourth RAID parity data is to be stored.

As described above, the HMB controller 1250 may generate RAID parity data corresponding to data which is to be stored in the HMB 13. The HMB controller 1250 may generate a codeword corresponding to data and may generate a codeword corresponding to RAID parity data. The HMB controller 1250 may store the codeword including the data in the HMB 13 and may store the codeword including the RAID parity data in the HMB 13. The HMB controller 1250 may receive (or load) a codeword from the HMB 13. The HMB controller 1250 may perform an error detection operation or an error correction operation based on the codeword. The HMB controller 1250 may perform a RAID recovery operation on the UECC data. The HMB controller 1250 may recover the UECC data based on the RAID parity data. Accordingly, the storage device 1100 having enhanced reliability may be provided.

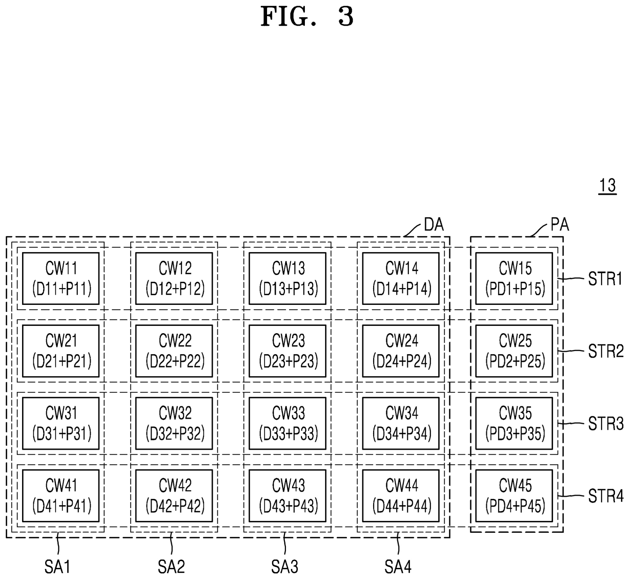

FIG. 3 is a diagram for describing the HMB 13 of FIG. 1 according to some implementations.

Referring to FIGS. 1 and 3, the storage device 1100 may store data and RAID parity data in the HMB 13. The storage device 1100 may store a codeword including data and a codeword including RAID parity data in the HMB 13. In some implementations, the HMB 13 may include a data region DA and a parity region PA. The storage device 1100 may store the data in the data region DA. The storage device 1100 may store the RAID parity data in the parity region PA.

In some implementations, the HMB controller 1250 may generate the RAID parity data corresponding to the data which is to be stored in the HMB 13. For example, when one chunk includes four pieces of unit data, the HMB controller 1250 may perform an XOR operation on the four pieces of unit data and may thus generate one piece of RAID parity data. In this case, one stripe may be configured with four pieces of unit data and one piece of RAID parity data. A chunk may be configured with four pieces of unit data. For example, the size of parity data may be equal to that of unit data. However, this disclosure is not limited thereto, and the number of unit data included in one stripe, the size of RAID parity data, and the number of RAID parity data may be determined by a RAID policy of the HMB controller 1250.

For example, a first stripe STR1 may include codewords CW11 to CW15, a second stripe STR2 may include codewords CW21 to CW25, a third stripe STR3 may include codewords CW31 to CW35, and a fourth stripe STR4 may include codewords CW41 to CW45.

For example, the codeword CW11 may include data D11 and a parity P11, the codeword CW12 may include data D12 and a parity P12, the codeword CW13 may include data D13 and a parity P13, the codeword CW14 may include data D14 and a parity P14, and the codeword CW15 may include first RAID parity data PD1 and a parity P15. The other codewords CW21 to CW45 may be similar thereto, and thus, their detailed descriptions are omitted.

In some implementations, the HMB controller 1250 may store first to fourth stripes STR1 to STR4 in the HMB 13. In some implementations, the HMB controller 1250 may generate RAID parity data based on pieces of data. The HMB controller 1250 may generate the RAID parity data based on a chunk. The chunk may include data used to generate the RAID parity data. For example, first RAID parity data PD1 may be generated based on a chunk including D11 to D14, second RAID parity data PD2 may be generated based on a chunk including D21 to D24, third RAID parity data PD3 may be generated based on a chunk including D31 to D34, and fourth RAID parity data PD4 may be generated based on a chunk including D41 to D44.

The HMB controller 1250 may store the data D11 to D44 in the data region DA and may store the RAID parity data PD1 to PD4 in the parity region PA. That is, the HMB controller 1250 may store the codewords CW11, CW12, CW13, CW14, CW21, CW22, CW23, CW24, CW31, CW32, CW33, CW34, CW41, CW42, CW43, and CW44, respectively including the data D11 to D44, in the data region DA. The HMB controller 1250 may store the codewords CW15, CW25, CW35, and CW45 respectively corresponding to the RAID parity data PD1 to PD4, in the parity region PA.

For example, the HMB controller 1250 may store the data D11 to D14 in the HMB 13. For example, the data D11 may be stored in a first sub region SA1, the data D12 may be stored in a second sub region SA2, the data D13 may be stored in a third sub region SA3, and the data D14 may be stored in a fourth sub region SA4. That is, the codeword CW11 including the data D11 may be stored in the first sub region SA1, the codeword CW12 including the data D12 may be stored in the second sub region SA2, the codeword CW13 including the data D13 may be stored in the third sub region SA3, and the codeword CW14 including the data D14 may be stored in the fourth sub region SA4.

In some implementations, because the first stripe STR1 includes the first RAID parity data PD1, even when one (for example, D13) of the data D11 to D14 included in the first stripe STR1 is not normally distinguished (for example, even when an error is not corrected by the ECC decoder 1252), the data D13 may be recovered based on the other data (i.e., subset data) D11, D12, and D14 and the first RAID parity data PD1.

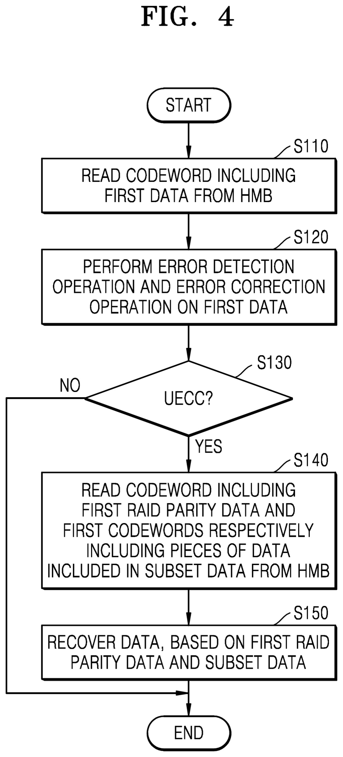

FIG. 4 is a flowchart illustrating an example of an operating method of the HMB controller 1250 of FIG. 1 according to some implementations.

Referring to FIGS. 1 and 4, the HMB controller 1250 may read data stored in the HMB 13. The HMB controller 1250 may perform an error detection operation and an error correction operation, based on a parity stored in the HMB 13. When an error is not corrected by the ECC decoder 1252, the HMB controller 1250 may perform a RAID recovery operation. The HMB controller 1250 may recover data based on RAID parity data.

In operation S110, the HMB controller 1250 may read a codeword including first data from the HMB 13. The HMB controller 1250 may load a codeword including HMB data in the HMB 13. For example, the HMB controller 1250 may transfer an HMB read request to the HMB 13. The HMB controller 1250 may receive a codeword corresponding to the HMB read request from the HMB 13. The HMB controller 1250 may receive the codeword including the first data.

In operation S120, the HMB controller 1250 may perform an error detection operation and an error correction operation on the first data. The HMB controller 1250 may perform a decoding operation based on the codeword including the first data. The HMB controller 1250 may perform the error detection operation and the error correction operation, based on a parity included in the codeword. The HMB controller 1250 may generate decoded data or corrected data.

In operation S130, the HMB controller 1250 may determine whether a UECC occurs. The HMB controller 1250 may determine whether an error of the decoded data is not corrected by the ECC decoder 1252. When the error is not corrected by the ECC decoder 1252, the HMB controller 1250 may perform operation S140. When the error is corrected by the ECC decoder 1252, the HMB controller 1250 may not perform the following operations and proceed to the end.

In operation S140, the HMB controller 1250 may read a codeword including first RAID parity data and a codeword including subset data from the HMB 13. The first RAID parity data may represent RAID parity data corresponding to the first data. The subset data may represent the other data of a stripe including the first data. The subset data may represent data used along with the first data, so as to generate the RAID parity data.

In operation S150, the HMB controller 1250 may recover the first data, based on the first RAID parity data and the subset data. The HMB controller 1250 may recover the decoded data, based on the first RAID parity data and the subset data. The HMB controller 1250 may perform an XOR operation on the first RAID parity data and the subset data to recover the first data.

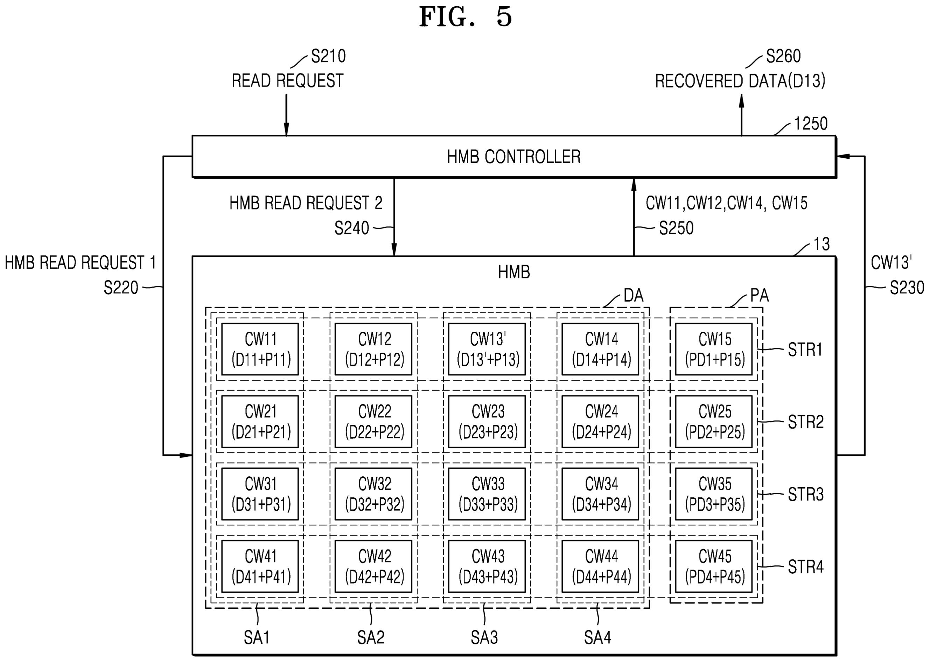

FIG. 5 is a diagram for describing an operation of the storage system 1000 of FIG. 1 according to some implementations.

Referring to FIGS. 1, 3, and 5, the HMB controller 1250 may perform a RAID recovery operation. When a codeword read from the HMB 13 is incapable of being corrected by the ECC decoder 1252, the HMB controller 1250 may perform the RAID recovery operation to recover data.

In operation S210, the HMB controller 1250 may receive a read request. In some implementations, the CPU 1210 or the FTL 1220 may transfer the read request to the HMB controller 1250. Alternatively, a module of the storage controller 1200 may receive the read request from the HMB controller 1250. For example, the read request may be a request which requests data D13 stored in the HMB 13.

In operation S220, the HMB controller 1250 may transfer a first HMB read request to the HMB 13. In response to the read request, the HMB controller 1250 may transfer the first HMB read request to the HMB 13. For example, the first HMB read request may include an address of the data D13. The HMB 13 may receive the first HMB read request.

In operation S230, the HMB 13 may transfer a codeword CW13' including data D13' to the HMB controller 1250. In response to the first HMB read request, the HMB 13 may transfer the codeword CW13' including the data D13' to the HMB controller 1250. The HMB 13 may transfer the data D13', included in the first HMB read request, to the HMB controller 1250. The data D13' may include an error. The HMB controller 1250 may receive the data D13' including the error. The HMB controller 1250 may receive the codeword CW13'.

The HMB controller 1250 may perform an error detection operation and an error correction operation on the data D13'. The HMB controller 1250 may perform a decoding operation based on the codeword CW13'. The HMB controller 1250 may perform an error detection operation and an error correction operation on the data D13', based on a parity P13. The HMB controller 1250 may generate decoded data. The HMB controller 1250 may decode the codeword CW13' to generate the data D13'.

The HMB controller 1250 may determine whether a UECC occurs. When the UECC occurs, the HMB controller 1250 may perform the following operations. For example, the HMB controller 1250 may correct a 1-bit error. When data includes an error of 2 or more bits, the HMB controller 1250 may not correct the error. The data D13' may include an error of 2 or more bits, and thus, the HMB controller 1250 may fail to correct the data D13'.

In operation S240, when the error of the data D13' is not corrected, the HMB controller 1250 may transfer a second HMB read request to the HMB 13. The HMB 13 may receive the second HMB read request. In some implementations, the HMB controller 1250 may read subset data D11, D12, and D14 and first RAID parity data PD1 through one HMB read request. For example, the second HMB read request may include an address of each of the subset data D11, D12, and D14 and an address of the first RAID parity data PD1. Alternatively, the HMB read request may include an address of the first stripe STR1.

In some implementations, the HMB controller 1250 may read the subset data D11, D12, and D14 and the first RAID parity data PD1 through a plurality of HMB read requests. For example, the HMB controller 1250 may transfer an HMB read request including an address of the data D11, transfer an HMB read request including an address of the data D12, transfer an HMB read request including an address of the data D14, and transfer an HMB read request including an address of the first RAID parity data PD1.

In operation S250, the HMB 13 may transfer, to the HMB controller 1250, codewords CW11, CW12, and CW14 respectively corresponding to the subset data D11, D12, and D14 and a codeword CW15 including the first RAID parity data PD1. Alternatively, the HMB 13 may transfer the first stripe STR1 including the first RAID parity data PD1 and the data D11 to D14 to the HMB controller 1250. The HMB controller 1250 may receive the subset data D11, D12, and D14 and the first RAID parity data PD1. That is, the HMB controller 1250 may receive the codewords CW11, CW12, CW14, and CW15.

The HMB controller 1250 may perform an error detection operation or an error correction operation based on the codeword. The codewords CW11, CW12, CW14, and CW15 may be assumed to be correctable by the ECC decoder 1252. The HMB controller 1250 may decode the codeword CW11 to generate the data D11, decode the codeword CW12 to generate the data D12, decode the codeword CW14 to generate the data D14, and decode the codeword CW15 to generate the first RAID parity data PD1.

The HMB controller 1250 may recover the data D13', based on the subset data D11, D12, and D14 and the first RAID parity data PD1. The HMB controller 1250 may generate recovered data D13. The HMB controller 1250 may perform an XOR operation on the subset data D11, D12, and D14 and the first RAID parity data PD1 to recover the data D13. In operation S260, the HMB controller 1250 may transfer the recovered data D13 to the CPU 1210 or the FTL 1220.

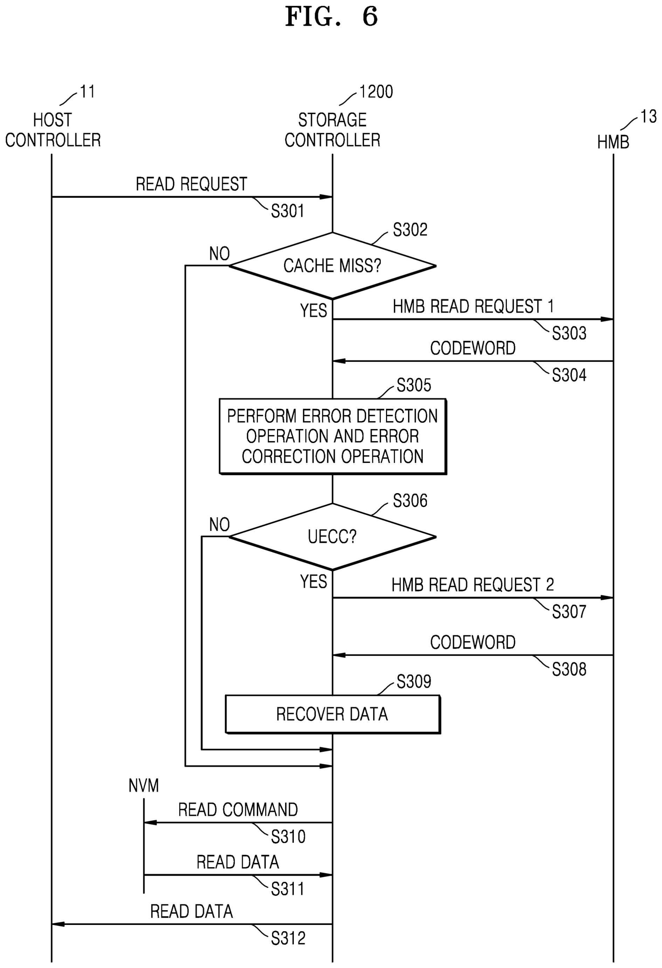

FIG. 6 is a flowchart illustrating an example of an operating method of the storage system 1000 of FIG. 1 according to some implementations.

Referring to FIGS. 1, 5, and 6, the storage device 1100 may perform a RAID recovery operation on data of the HMB 13. Hereinafter, data may be assumed to be map data. However, this disclosure is not limited thereto.

In operation S301, the host controller 11 may transfer a read request to the storage controller 1200. For example, the read request may include a first logical address. The storage controller 1200 may receive the read request.

In some implementations, the storage controller 1200 may cache map data in the internal memory 1253. The storage controller 1200 may manage a mapping table cache. For example, the storage controller 1200 may cache a frequently-accessed portion of the map data and may manage the cached data in the mapping table cache.

In operation S302, the storage controller 1200 may determine whether a cache miss occurs. In some implementations, the storage controller 1200 may determine whether map data (for example, D13 of FIG. 5) corresponding to a first logical address is in the internal memory 1253. The storage controller 1200 may determine whether the map data corresponding to the first logical address is in the mapping table cache. When the cache miss is determined, the storage controller 1200 may perform operation S303, and when a cache hit is determined, the storage controller 1200 may perform operation S310.

In operation S303, the storage controller 1200 may transfer a first HMB read request to the HMB 13. For example, the first HMB read request may include an address of map data (for example, D13 of FIG. 3) corresponding to the first logical address. That is, the first HMB read request may include an address of the HMB 13 corresponding to requested map data.

In operation S304, the HMB 13 may transfer the map data to the storage controller 1200. For example, the HMB 13 may transfer a codeword (for example, CW13' of FIG. 5) including map data (for example, D13' of FIG. 5) having an error to the storage controller 1200. In operation S305, the storage controller 1200 may perform an error detection operation and an error correction operation. The storage controller 1200 may perform a decoding operation on data read from the HMB 13. The storage controller 1200 may detect an error of read map data and may correct the error based on a parity (for example, P13 of FIG. 5). When the map data read from the HMB 13 includes an error exceeding an error correction capability of the ECC decoder 1252, the ECC decoder 1252 may not correct the error of the read map data. The ECC decoder 1252 may decode a codeword (for example, CW13' of FIG. 5) to generate data (for example, D13' of FIG. 5).

In operation S306, the storage controller 1200 may determine whether the read map data is UECC data. For example, the storage controller 1200 may determine whether decoded data (for example, D13' of FIG. 5) is the UECC data. When an error is not corrected by the ECC decoder 1252, the storage controller 1200 may determine that the UECC data occurs. When it is determined that the UECC data occurs, the storage controller 1200 may perform operation S307. When it is determined that the UECC data does not occur, the storage controller 1200 may perform operation S310.

In operation S307, the storage controller 1200 may transfer a second HMB read request to the HMB 13. For example, the storage controller 1200 may transfer a plurality of HMB read requests to the HMB 13. In operation S308, the HMB 13 may transfer the codeword to the storage controller 1200.

For example, the storage controller 1200 may transfer an HMB read request, including an address corresponding to data D11 among pieces of subset data, to the HMB 13. In response to the HMB read request, the HMB 13 may transfer a codeword CW11 to the storage controller 1200. The storage controller 1200 may transfer an HMB read request, including an address corresponding to data D12 among the pieces of subset data, to the HMB 13. In response to the HMB read request, the HMB 13 may transfer a codeword CW12 to the storage controller 1200. The storage controller 1200 may transfer an HMB read request, including an address corresponding to data D14 among the pieces of subset data, to the HMB 13. In response to the HMB read request, the HMB 13 may transfer a codeword CW14 to the storage controller 1200. The storage controller 1200 may transfer an HMB read request, including an address corresponding to first RAID parity data PD1, to the HMB 13. In response to the HMB read request, the HMB 13 may transfer a codeword CW15 to the storage controller 1200.

In operation S309, the storage controller 1200 may recover the map data. For example, the storage controller 1200 may recover the map data, based on the subset data and the first RAID parity data. The storage controller 1200 may perform a read operation on the non-volatile memory device 1300, based on recovered map data.

In operation S310, the storage controller 1200 may transfer a read command to the non-volatile memory device 1300. The read command may include a physical address included in the recovered map data (for example, D13). The non-volatile memory device 1300 may receive the read command. In operation S311, the non-volatile memory device 1300 may transfer read data to the storage controller 1200 in response to the read command. The read data may be data corresponding to the read command. In operation S312, the storage controller 1200 may transfer the read data to the host controller 11.

In FIG. 6, it is illustrated that the storage controller 1200 receives a read request from the host controller 11 and transfers read data to the host controller 11, but this disclosure is not limited thereto. The storage controller 1200 may load the read request from the host memory 12 and may store the read data in the host memory 12, based on control by the host controller 11.

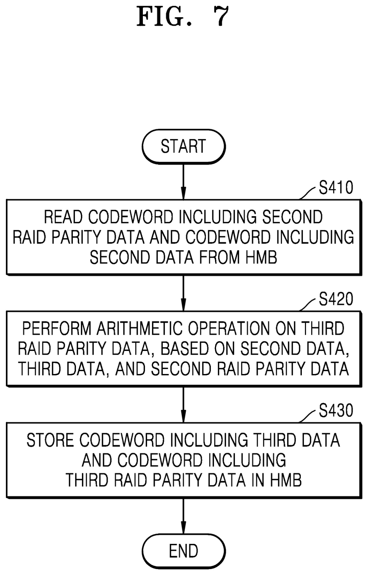

FIG. 7 is a flowchart illustrating an example of an operating method of the HMB controller 1250 of FIG. 1 according to some implementations.

Referring to FIGS. 1 and 7, the HMB controller 1250 may read data stored in the HMB 13. The HMB controller 1250 may perform an HMB data updating operation. The HMB controller 1250 may load only RAID parity data and data which is to be updated and may update the data. That is, the HMB controller 1250 may perform an HMB data updating operation without loading subset data, unlike a RAID recovery operation. Here, the HMB data updating operation may represent an operation of updating data stored in the HMB 13.

In operation S410, the HMB controller 1250 may read a codeword including second RAID parity data and a codeword including second data from the HMB 13. The second RAID parity data may represent RAID parity data corresponding to the second data. To update data, the HMB controller 1250 may load data and RAID parity data from the HMB 13. For example, the HMB controller 1250 may transfer an HMB read request to the HMB 13. The HMB controller 1250 may receive the codeword including the second RAID parity data and the codeword including the second data from the HMB 13.

In operation S420, the HMB controller 1250 may perform an arithmetic operation on new RAID parity data. The HMB controller 1250 may perform an arithmetic operation on the new RAID parity data without subset data. The HMB controller 1250 may perform an arithmetic operation on third RAID parity data, based on the second data, third data which is updated data, and the second RAID parity data. The HMB controller 1250 may perform an arithmetic operation on the second data, the third data, and the second RAID parity data to generate third RAID parity data.

In operation S430, the HMB controller 1250 may store the third data and the third RAID parity data in the HMB 13. For example, the HMB controller 1250 may transfer an HMB write request and a codeword to the HMB 13. The HMB controller 1250 may store a codeword including the third data and a codeword including the third RAID parity data in the HMB 13. The HMB 13 may receive the HMB write request, the codeword including the third data, and the codeword including the third RAID parity data. The HMB 13 may store the codeword including the third data in the data region DA and may store the third RAID parity data in the parity region PA.

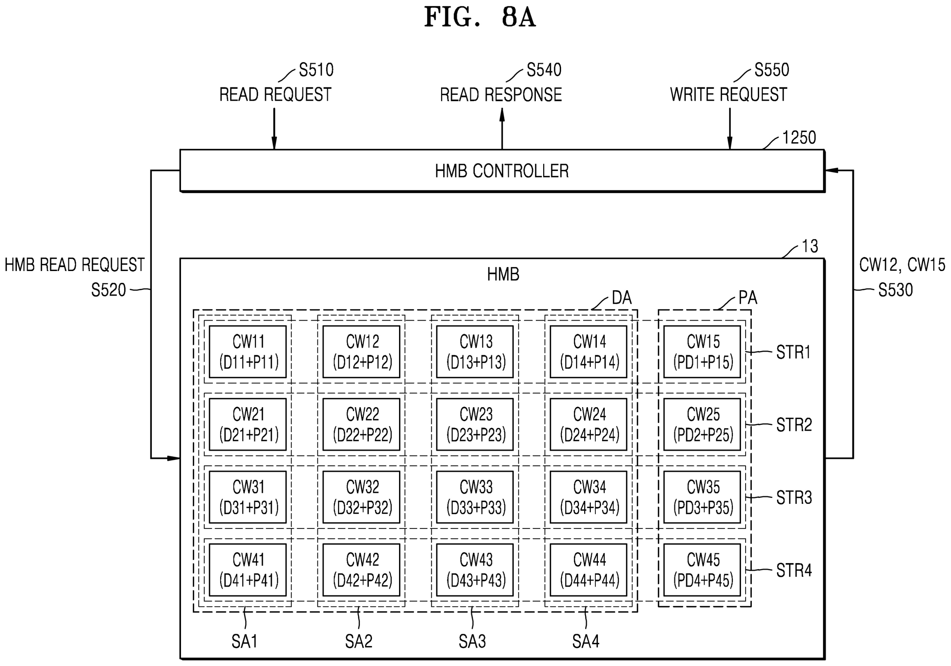

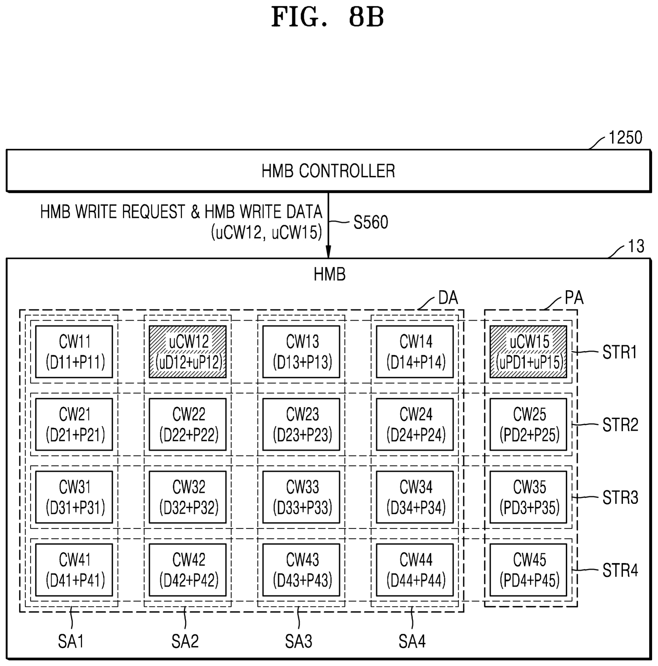

FIGS. 8A and 8B are diagrams for describing an operation of the storage system 1000 of FIG. 1 according to some implementations.

Referring to FIGS. 1, 3, 8A, and 8B, the HMB controller 1250 may perform an HMB data updating operation. The HMB controller 1250 may manage data stored in the HMB 13.

In operation S510, the HMB controller 1250 may receive a read request. In some implementations, the CPU 1210 or the FTL 1220 may transfer the read request to the HMB controller 1250. Alternatively, a module of the storage controller 1200 may transfer the read request to the HMB controller 1250. For example, the read request may be a request which requests data D12 stored in the HMB 13. The read request may represent a read request for updating HMB data.

In operation S520, the HMB controller 1250 may transfer an HMB read request to the HMB 13. In response to the read request, the HMB controller 1250 may transfer the HMB read request to the HMB 13. For example, the HMB read request may include an address of the data D12 and an address of first RAID parity data PD1. The HMB 13 may receive the HMB read request.

In some implementations, the HMB controller 1250 may transfer a plurality of HMB read requests. The HMB controller 1250 may transfer an HMB read request including an address of a codeword CW12 corresponding to data D12 and may transfer an HMB read request including an address of a codeword CW15 corresponding to the first RAID parity data PD1 to the HMB 13.

In operation S530, the HMB controller 1250 may transfer the codeword CW12 including the data D12 and the codeword CW15 including the first RAID parity data PD1 to the HMB controller 1250. In response to the HMB read request, the HMB 13 may provide the codeword CW12 including the data D12 to the HMB controller 1250 and may provide the codeword CW15 including the first RAID parity data PD1 to the HMB controller 1250.

In some implementations, the HMB controller 1250 may perform an error detection operation or an error correction operation based on a codeword. For example, the HMB controller 1250 may perform an error detection operation or an error correction operation based on the codeword CW12. The HMB controller 1250 may decode the codeword CW12 to generate the data D12. The HMB controller 1250 may decode the codeword CW15 to generate the first RAID parity data PD1. The data D12 and the first RAID parity data PD1 may be assumed not to be UECC data.

In operation S540, the HMB controller 1250 may transfer a read response to the CPU 1210 or the FTL 1220. In operation S550, the HMB controller 1250 may receive a write request. The HMB controller 1250 may obtain the write request and updated data uD12.

In some implementations, the HMB controller 1250 may generate new RAID parity data. Because the data D12 is changed to the updated data uD12, the HMB controller 1250 may generate the new RAID parity data. The HMB controller 1250 may generate new RAID parity data uPD1, based on the data D12, the first RAID parity data PD1, and the updated data uD12. The HMB controller 1250 may perform an XOR operation on the data D12, the first RAID parity data PD1, and the updated data uD12 to generate the new RAID parity data uPD1.

In some implementations, the HMB controller 1250 may perform an encoding operation. The HMB controller 1250 may encode the updated data uD12 to generate a codeword uCW12. The codeword uCW12 may include the updated data uD12 and a parity uP12. The HMB controller 1250 may encode the new RAID parity data uPD1 to generate a codeword uCW15. The codeword uCW15 may include the new RAID parity data uPD1 and a parity uP15.

In operation S560, the HMB controller 1250 may transfer an HMB write request and a codeword to the HMB 13. The HMB controller 1250 may transfer the codewords uCW12 and uCW15 to the HMB 13. For example, the HMB controller 1250 may transfer a plurality of HMB write requests. The HMB controller 1250 may transfer an HMB write request including an address corresponding to the codeword uCW12 and the codeword uCW12 to the HMB 13. The HMB controller 1250 may transfer an HMB write request including an address corresponding to the codeword uCW15 and the codeword uCW15 to the HMB 13.

The HMB 13 may receive the HMB write request and the codewords uCW12 and uCW15. The HMB 13 may store the codeword uCW12 in the data region DA and may store the codeword uCW15 in the parity region PD.

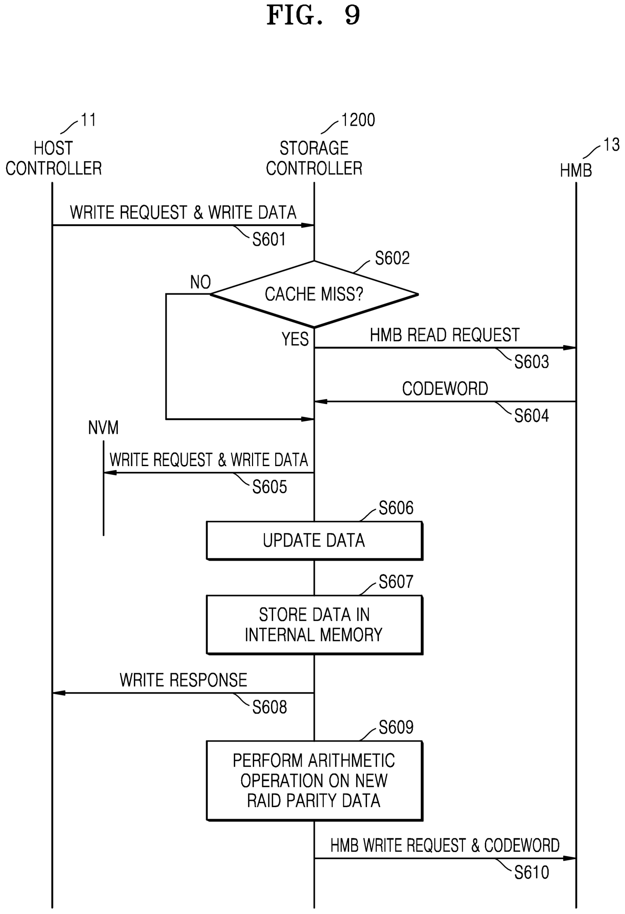

FIG. 9 is a flowchart illustrating an example of an operating method of the storage system 1000 of FIG. 1 according to some implementations.

Referring to FIGS. 1 and 9, the storage device 1100 may perform an update operation on data of the HMB 13. That is, the storage device 1100 may perform an HMB data updating operation. Hereinafter, data may be assumed to be map data. However, this disclosure is not limited thereto.

In operation S601, the host controller 11 may transfer a write request and write data to the storage controller 1200. For example, the write request may include a second logical address. The storage controller 1200 may receive the write request and the write data.

In operation S602, the storage controller 1200 may determine whether a cache miss occurs. In some implementations, the storage controller 1200 may determine whether map data (for example, D12 of FIG. 8A) corresponding to a second logical address is in the internal memory 1253. The storage controller 1200 may determine whether the map data corresponding to the second logical address is in the mapping table cache. When the cache miss is determined, the storage controller 1200 may perform operation S603, and when a cache hit is determined, the storage controller 1200 may perform operation S605.

In operation S603, the storage controller 1200 may transfer an HMB read request to the HMB 13. In operation S604, the HMB 13 may transfer a codeword to the storage controller 1200. For example, the HMB 13 may transfer a codeword CW12 including map data (for example, D12 of FIG. 8A) to the storage controller 1200. The HMB 13 may transfer a codeword CW15 including RAID parity data PD1 to the storage controller 1200. For example, the map data (for example, D12 of FIG. 8A) may represent a mapping relationship between a second logical address and a first physical address.

The storage controller 1200 may perform an error detection operation or an error correction operation based on a codeword. The storage controller 1200 may decode the codeword CW12 to generate data D12. The storage controller 1200 may decode the codeword CW15 to generate first RAID parity data PD1.

In operation S605, the storage controller 1200 may transfer a write command and write data to the non-volatile memory device 1300. The storage controller 1200 may store the write data at a second physical address which differs from the first physical address.

In operation S606, the storage controller 1200 may update the map data. The storage controller 1200 may store data, corresponding to the second logical address, at the second physical address and may thus update the map data. The storage controller 1200 may generate updated map data uD12 representing a mapping relationship between the second logical address and the second physical address. That is, the storage controller 1200 may update the map data D12 to the updated map data uD12.

In operation S607, the storage controller 1200 may store the updated map data uD12 in the internal memory 1253. The storage controller 1200 may store the updated map data uD12 in a mapping table cache. In operation S608, the storage controller 1200 may transfer a write response to the host controller 11. The write response may represent a response corresponding to the write request of operation S601.

In operation S609, the storage controller 1200 may perform an arithmetic operation on new RAID parity data. For example, the storage controller 1200 may perform an arithmetic operation on new RAID parity data uPD1, based on the map data D12, the updated map data uD12, and the first RAID parity data PD1. For example, the storage controller 1200 may perform an XOR operation on the map data D12, the updated map data uD12, and the first RAID parity data PD1 to generate the new RAID parity data uPD1.

The storage controller 1200 may perform an encoding operation. The storage controller 1200 may encode the updated map data uD12 to generate a codeword uCW12. The storage controller 1200 may encode the new RAID parity data uPD1 to generate a codeword uCW15.

In operation S610, the storage controller 1200 may transfer an HMB write request and a codeword to the HMB 13. The storage controller 1200 may transfer the HMB write request and the codewords uCW12 and uCW15 to the HMB 13. The HMB 13 may receive the HMB write request and the codewords uCW12 and uCW15. In response to the HMB write request, the HMB 13 may store the codeword uCW12 in the data region DA and may store the codeword uCW15 in the parity region PA.

In FIG. 9, it is illustrated that the storage controller 1200 receives a write request from the host controller 11 and transfers a write response to the host controller 11, but this disclosure is not limited thereto. The storage controller 1200 may load the write request from the host memory 12 and may store the write response in the host memory 12, based on control by the host controller 11.

As described above, the storage controller 1200 may update the map data and the RAID parity data. That is, the storage controller 1200 may store the updated map data uD12 and the new RAID parity data uPD1 in the HMB 13.

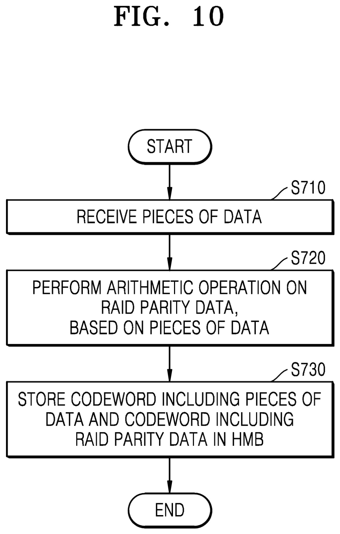

FIG. 10 is a flowchart illustrating an example of an operating method of the HMB controller 1250 of FIG. 1 according to some implementations.

Referring to FIGS. 1 and 10, the HMB controller 1250 may store metadata, stored in the non-volatile memory device 1300, in the HMB 13 in an initialization operation. The HMB controller 1250 may perform a metadata load operation. For example, the metadata load operation may represent an operation of writing a large amount of metadata in the HMB 13 first. In some implementations, the HMB controller 1250 may write a map table, stored in the non-volatile memory device 1300, in the HMB 13.

In operation S710, the HMB controller 1250 may receive pieces of data. For example, the pieces of data may configure one chunk. In operation S720, the HMB controller 1250 may perform an arithmetic operation on RAID parity data, based on the pieces of data. In some implementations, the HMB controller 1250 may perform an XOR operation on the pieces of data to generate RAID parity data.

In operation S730, the HMB controller 1250 may store the pieces of data and the RAID parity data in the HMB 13. The HMB controller 1250 may store the pieces of data in the data region DA and may store the RAID parity data in the parity region PA.

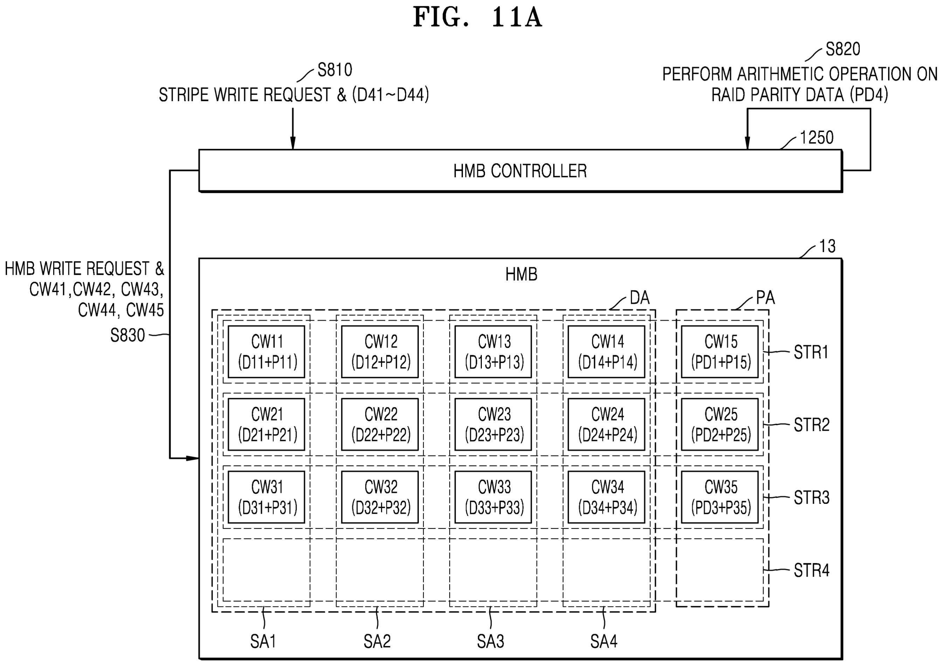

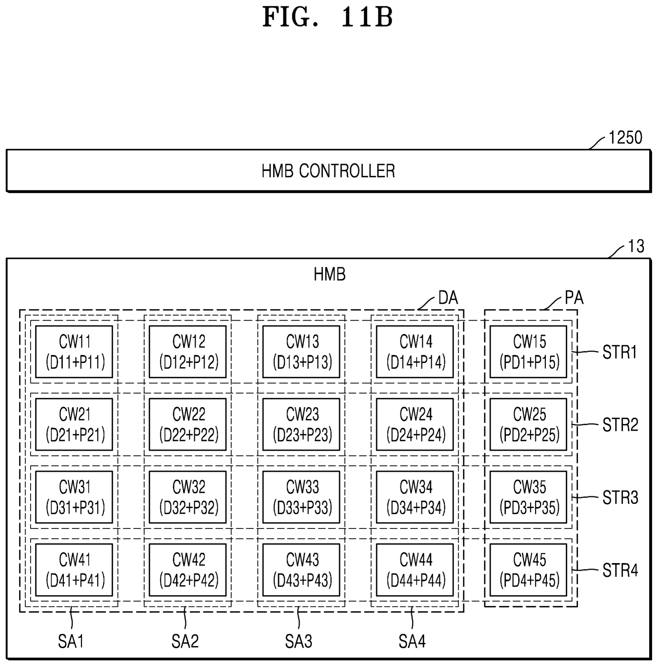

FIGS. 11A and 11B are diagrams for describing an operation of the storage system 1000 of FIG. 1 according to some implementations.

Referring to FIGS. 1, 11A, and 11B, the HMB controller 1250 may perform a stripe write operation. For example, the stripe write operation may generate RAID parity data corresponding to the pieces of data and may represent an operation of storing the pieces of data and the RAID parity data in the HMB 13. The HMB controller 1250 may generate the RAID parity data corresponding to the pieces of data and may store a stripe, including a codeword including each of the pieces of data and a codeword including the RAID parity data, in the HMB 13.

In operation S810, the HMB controller 1250 may receive a stripe write request and pieces of data D41 to D44. In some implementations, the CPU 1210 or the FTL 1220 may transfer the stripe write request to the HMB controller 1250. Alternatively, a module of the storage controller 1200 may transfer the stripe write request to the HMB controller 1250.

In operation S820, the HMB controller 1250 may perform an arithmetic operation on the RAID parity data. For example, the HMB controller 1250 may perform an arithmetic operation on the RAID parity data, based on the pieces of data D41 to D44. The HMB controller 1250 may perform an XOR operation on the pieces of data D41 to D44 to generate fourth RAID parity data PD4.

The HMB controller 1250 may perform an encoding operation. The HMB controller 1250 may encode the data D41 to generate a codeword CW41. The codeword CW41 may include the data D41 and a parity P41. The HMB controller 1250 may encode the data D42 to generate a codeword CW42. The codeword CW42 may include the data D42 and a parity P42. The HMB controller 1250 may encode the data D43 to generate a codeword CW43. The codeword CW43 may include the data D43 and a parity P43. The HMB controller 1250 may encode the data D44 to generate a codeword CW44. The codeword CW44 may include the data D44 and a parity P44. The HMB controller 1250 may encode the fourth RAID parity data PD4 to generate a codeword CW45. The codeword CW45 may include the fourth RAID parity data PD4 and a parity P45.

In operation S830, the HMB controller 1250 may transfer an HMB write request and the codewords CW41 to CW45 to the HMB 13. The HMB controller 1250 may transfer a stripe STR4 including the codewords CW41 to CW45 to the HMB 13. In some implementations, a fourth HMB write request may include an address corresponding to a fourth stripe STR4. The HMB 13 may receive the HMB write request and the fourth stripe STR4. For example, the HMB 13 may store the pieces of data D41 to D44 in the data region DA and may store the fourth RAID parity data PD4 in the parity region PA.

In some implementations, the HMB controller 1250 may store the fourth stripe STR4 in the HMB 13 through a plurality of HMB write requests. For example, the HMB controller 1250 may transfer an HMB write request including an address of the codeword CW41 and the codeword CW41. The HMB controller 1250 may transfer an HMB write request including an address of the codeword CW42 and the codeword CW42. The HMB controller 1250 may transfer an HMB write request including an address of the codeword CW43 and the codeword CW43. The HMB controller 1250 may transfer an HMB write request including an address of the codeword CW44 and the codeword CW44. The HMB controller 1250 may transfer an HMB write request including an address of the codeword CW45 and the codeword CW45.

The HMB 13 may receive an HMB write request and the codewords CW41 to CW45. In response to the HMB write request, the HMB 13 may store the codewords CW41 to CW45. The HMB 13 may store the codewords CW41 to CW45 in the data region DA and may store the codeword CW45 in the parity region PA. Accordingly, when an error occurs in data stored in the HMB 13, the HMB controller 1250 may correct the data using the RAID engine 1254. In some implementations, even when a UECC occurs in the HMB 13, the HMB controller 1250 may correct the data without reading from the NAND memory device. As a result, a recovery operation time may be reduced, and an overall recovery latency may be improved.

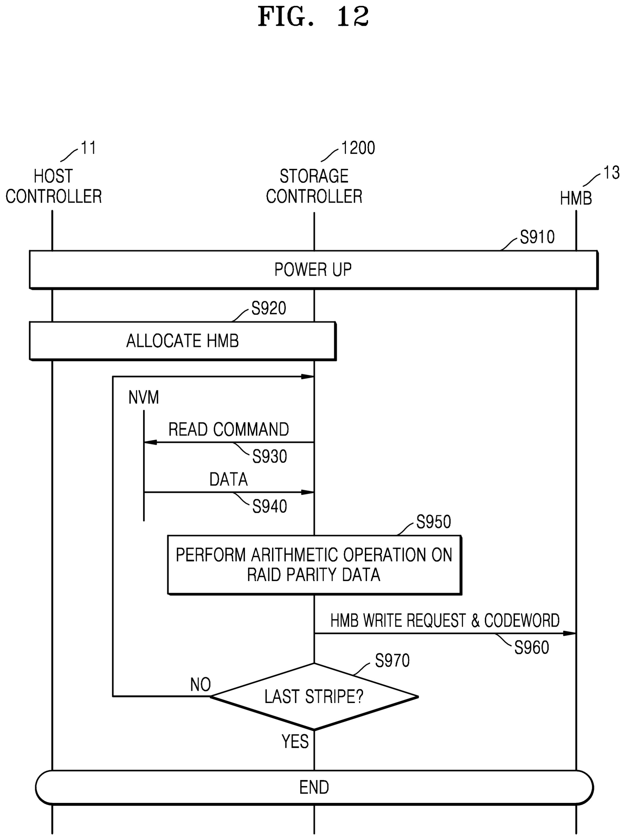

FIG. 12 is a flowchart illustrating an example of an operating method of the storage system 1000 of FIG. 1 according to some implementations.

Referring to FIGS. 1 and 12, the storage device 1100 may perform a metadata load operation through a stripe write operation. Hereinafter, metadata may be assumed to be map data. However, this disclosure is not limited thereto. The storage device 1100 may store a total map table, stored in the non-volatile memory device 1300, in the HMB 13.

The non-volatile memory device 1300 may store or output user data, based on control by the storage controller 1200. The non-volatile memory device 1300 may store or output map data, based on control by the storage controller 1200. In some implementations, map data MD stored in the non-volatile memory device 1300 may include mapping information corresponding to all of the user data stored in the non-volatile memory device 1300. The map data MD stored in the non-volatile memory device 1300 may be stored in the HMB 13 in an initialization operation of the storage device 1100. The map data MD may be transferred from the storage device 1100 to the HMB 13 in an initialization operation of the storage system 1000 or the initialization operation of the storage device 1100.

In some implementations, the metadata load operation may be performed when performing the initialization operation of the storage device 1100. However, this disclosure is not limited thereto, and the metadata load operation may be performed in the middle of a normal operation (for example, for a runtime) of the storage device 1100. For example, depending on the case, all metadata stored in the HMB 13 may be flushed to the storage device 1100, and then, metadata may be stored in the HMB 13 through the metadata data load operation.

In operation S910, the storage system 1000 may be powered up. When the storage system 1000 is powered up, the host controller 11 may transfer, to the storage device 1100, information about power-up or initialization start. In response to the information about power-up or initialization start, the storage device 1100 may perform an initialization operation.

In operation S920, the host controller 11 may allocate the HMB 13 to the storage device 1100. The host controller 11 may distinguish the storage device 1100, based on device information. The host controller 11 may allocate the HMB 13 to the storage device 1100 in response to a request of the storage device 1100.

In operation S930, the storage controller 1200 may transfer a read command to the non-volatile memory device 1300. The read command may include a physical address of map data. In operation S940, the non-volatile memory device 1300 may transfer stored map data to the storage controller 1200. In operation S950, the storage controller 1200 may perform an arithmetic operation on RAID parity data. The storage controller 1200 may perform an XOR operation on pieces of map data for configuring one stripe to generate the RAID parity data.

In operation S960, the storage controller 1200 may transfer an HMB write request and a codeword to the HMB 13. The storage controller 1200 may store a codeword including each of pieces of data and a codeword including the RAID parity data in the HMB 13.

In operation S970, the storage controller 1200 may determine whether the stripe is a last stripe. Here, the last stripe may represent a stripe including final data of map data which is to be stored in the HMB 13. The storage controller 1200 may determine whether the map data is last map data which is to be stored in the HMB 13. When it is determined not to be the last stripe, the storage controller 1200 may perform operation S930 again.

As described above, the storage device 1100 may store map data, needed for managing the non-volatile memory device 1300, in the HMB 13 through a stripe write operation.

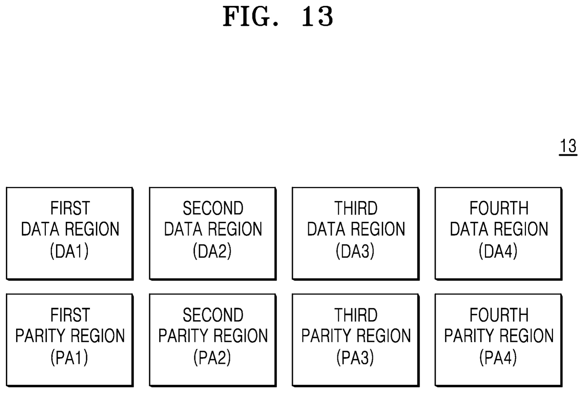

FIG. 13 is a diagram for describing an operation of the storage device 1100 of FIG. 1 according to some implementations.

Referring to FIGS. 1 and 13, in some implementations, the storage device 1100 may divide the HMB 13 into a plurality of regions to use the HMB 13. For example, the HMB 13 may include first to fourth data regions DA1 to DA4 and first to fourth parity regions PA1 to PA4. However, this disclosure is not limited thereto.

In some implementations, the storage device 1100 may store data in different regions, based on a type of data. For example, a type of data may include first to fourth types T1 to T4. The first type T1 may represent map data, the second type T2 may represent metadata instead of the map data, the third type T3 may represent garbage collection (GC) data (or data stored in a GC buffer), and the fourth type T4 may represent a journal.

For example, the storage device 1100 may store data of the first type T1 in the first data region DA1. The storage device 1100 may store RAID parity data, corresponding to the data of the first type T1, in the first parity region PA1. The storage device 1100 may store data of the second type T2 in the second data region DA2. The storage device 1100 may store RAID parity data, corresponding to the data of the second type T2, in the second parity region PA2. The storage device 1100 may store data of the third type T3 in the third data region DA3. The storage device 1100 may store RAID parity data, corresponding to the data of the third type T3, in the third parity region PA3. The storage device 1100 may store data of the fourth type T4 in the fourth data region DA4. The storage device 1100 may store RAID parity data, corresponding to the data of the fourth type T4, in the fourth parity region PA4.

In some implementations, the storage device 1100 may use a RAID scheme on only some of pieces of data stored in the HMB 13. For example, the storage device 1100 may store data of the first type T1 in the HMB 13 by using the RAID scheme and may store data of the second type T2 in the HMB 13 without using the RAID scheme. The storage device 1100 may activate RAID on the data of the first type T1 and may deactivate RAID on the data of the second type T2. Accordingly, the storage device 1100 and the storage system 1000, which have enhanced performance and efficiently manage a storage space, may be provided.

In some implementations, the storage device 1100 may differently apply a RAID scheme, based on a significance of data. The storage device 1100 may determine a RAID scheme, based on a type of data. For example, the storage device 1100 may determine a size of a chunk, based on a type of data.

For example, the storage device 1100 may generate RAID parity data of data of the first type T1, based on a first RAID scheme. The storage device 1100 may generate RAID parity data of data of the second type T2, based on a second RAID scheme. The storage device 1100 may generate RAID parity data of data of the third type T3, based on a third RAID scheme. The storage device 1100 may generate RAID parity data of data of the fourth type T4, based on a fourth RAID scheme.

In some implementations, the HMB controller 1250 may generate a size of a chunk, based on a type of data which is to be stored in the HMB 13. For example, the HMB controller 1250 may determine a size of a chunk on data of the first type T1 to be a first value (for example, about 4 KB), determine a size of a chunk on data of the second type T2 to be a second value (for example, about 16 KB), determine a size of a chunk on data of the third type T3 to be a third value (for example, about 768 KB), and determine a size of a chunk on data of the fourth type T4 to be a fourth value (for example, about 64 KB).

For example, data of the first type T1 may be map data and may be high in significance, and thus, the HMB controller 1250 may determine a size of a chunk to be small. Data of the third type T3 may be GC data and may be relatively low in significance (for example, compared to data of another type), and thus, the HMB controller 1250 may determine a size of a chunk to be large.

In some implementations, based on a type of data, sizes of pieces of unit data configuring a stripe may differ. For example, unit data may represent one of pieces of data configuring a stripe. Alternatively, based on a type of data, sizes of stripes may differ. For example, as a significance of data increases, a size of a stripe may decrease. Data of the first type T1 may require high reliability, and data of the second type T2 may require low reliability. A stripe size of data of the first type T1 may be less than a stripe size of data of the second type T2.

In some implementations, based on a type of data, sizes of pieces of RAID parity data may differ. For example, a size of RAID parity data of data of the first type T1 may have a first value, and a size of RAID parity data of data of the second type T2 may have a second value. The first value may differ from the second value.

In a case which uses a RAID scheme, various additional operations such as generating a RAID parity may be performed. As the amount of data increases, a load and latency in performing operations may increase, causing a degradation in performance of a storage device or a storage system. Also, a capacity of a storage device may decrease due to RAID parity data. However, the HMB controller 1250 according to some implementations may determine a RAID scheme, based on a type of data. Accordingly, the storage device 1100 and the storage system 1000, which efficiently use resources and have enhanced performed, may be provided.

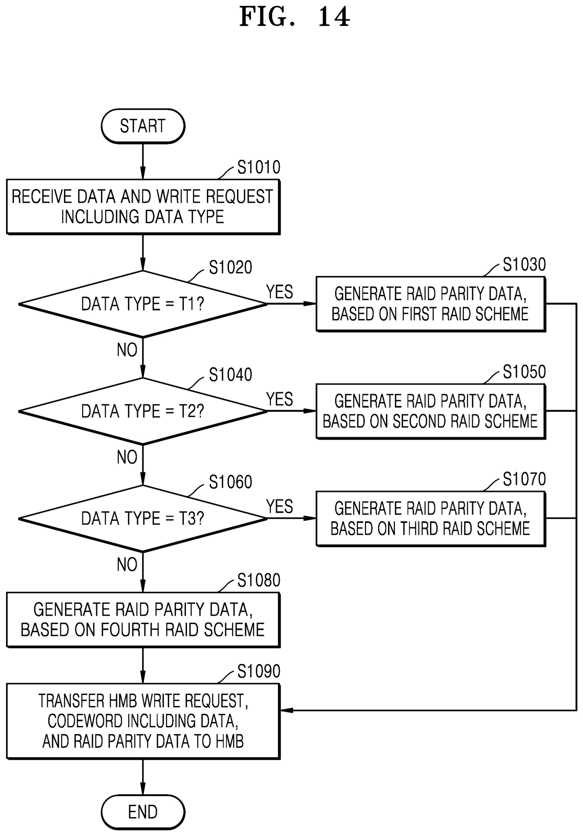

FIG. 14 is a flowchart illustrating an example of an operating method of the HMB controller 1250 of FIG. 1 according to some implementations.

Referring to FIGS. 1, 13, and 14, the HMB controller 1250 may determine a RAID scheme, based on a type of data. In some implementations, a RAID scheme may represent a method of generating a parity, a RAID level, a size of a stripe, a size of parity data, a size of a chunk, or a size of unit data. For example, a chunk may represent all of pieces of data used in generating of RAID parity data.

For example, the RAID level may represent one of RAID level 0 (striped set without parity or striping), RAID level 1 (mirrored set without parity or mirroring), RAID level 2 (hamming code parity), RAID level 3 (striped set with dedicated parity, bit interleaved parity, or byte level parity), RAID level 4 (block level parity), RAID level 5 (striped set with distributed parity or interleave parity), RAID level 6 (striped set with dual distributed parity), RAID level 7, RAID level 10, and RAID level 53, or a RAID level (for example, RAID 0+1, RAID 1+0, RAID 5+0, RAID 5+1, or RAID 0+1+5) where at least two of the RAID levels are merged.

For example, the first RAID scheme may configure a chunk of a first size, the second RAID scheme may configure a chunk of a second size, the third RAID scheme may configure a chunk of a third size, and the fourth RAID scheme may configure a chunk of a fourth size.

In operation S1010, the HMB controller 1250 may receive data and a write request including a data type. The HMB controller 1250 may determine a RAID scheme, based on a data type (for example, a type of data to be stored in the HMB 13).

In operation S1020, the HMB controller 1250 may determine whether a data type is the first type T1. When the data type is the first type T1, the HMB controller 1250 may perform operation S1030, and when the data type is not the first type T1, the HMB controller 1250 may perform operation S1040.

In operation S1030, the HMB controller 1250 may generate RAID parity data, based on the first RAID scheme. For example, the HMB controller 1250 may configure the chunk of the first size. The HMB controller 1250 may generate the RAID parity data based on the chunk of the first size.

In operation S1040, the HMB controller 1250 may determine whether the data type is the second type T2. When the data type is the second type T2, the HMB controller 1250 may perform operation S1050, and when the data type is not the second type T2, the HMB controller 1250 may perform operation S1060.

In operation S1050, the HMB controller 1250 may generate RAID parity data, based on the second RAID scheme. For example, the HMB controller 1250 may configure the chunk of the second size. The HMB controller 1250 may generate the RAID parity data based on the chunk of the second size.

In operation S1060, the HMB controller 1250 may determine whether the data type is the third type T3. When the data type is the third type T3, the HMB controller 1250 may perform operation S1070, and when the data type is not the third type T3, the HMB controller 1250 may perform operation S1080.

In operation S1070, the HMB controller 1250 may generate RAID parity data, based on the third RAID scheme. For example, the HMB controller 1250 may configure the chunk of the third size. The HMB controller 1250 may generate the RAID parity data based on the chunk of the third size.

In operation S1080, the HMB controller 1250 may generate RAID parity data, based on the fourth RAID scheme. For example, the HMB controller 1250 may configure the chunk of the fourth size. The HMB controller 1250 may generate the RAID parity data based on the chunk of the fourth size.

In operation S1090, the HMB controller 1250 may transfer an HMB write request, a codeword including data, and a codeword including RAID parity data to the HMB 13. The HMB controller 1250 may store data and RAID parity data in a region corresponding to a data type. For example, when the data type is the first type T1, the HMB controller 1250 may store data in the first data region DA1 and may store RAID parity data in the first parity region PA1.

As described above, the HMB controller 1250 may determine a RAID scheme to be suitable for content and significance of data. For example, the HMB controller 1250 may determine a size of parity data and a chunk size corresponding to a data type. The HMB controller 1250 may efficiently manage resources by applying different RAID schemes, based on a data type.

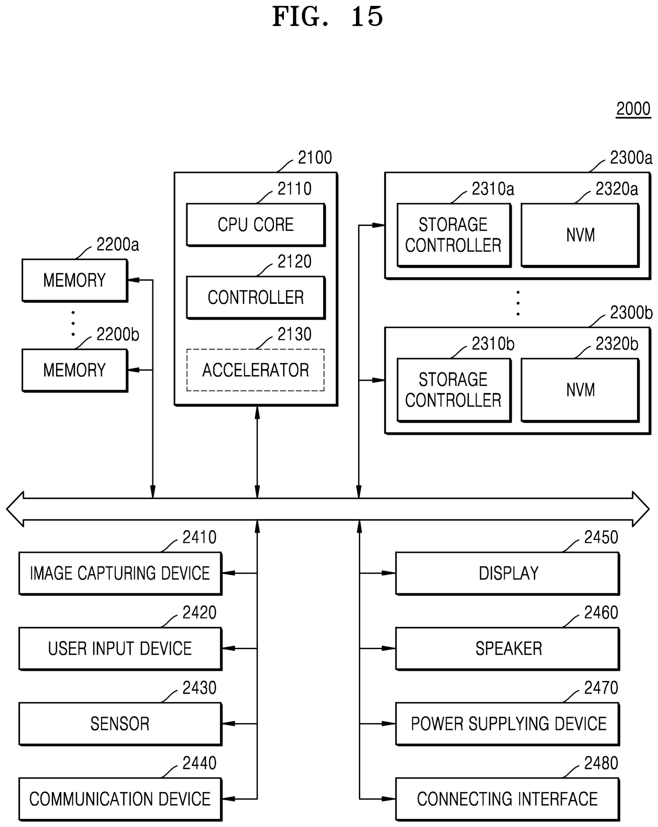

FIG. 15 is a diagram of a system to which a storage device is applied, according to some implementations.

The system 2000 of FIG. 15 may basically be a mobile system, such as a portable communication terminal (e.g., a mobile phone), a smartphone, a tablet personal computer (PC), a wearable device, a healthcare device, or an Internet of things (IOT) device. However, the system 2000 of FIG. 15 is not necessarily limited to the mobile system and may be a PC, a laptop computer, a server, a media player, or an automotive device (e.g., a navigation device).

Referring to FIG. 15, the system 2000 may include a main processor 2100, memories (e.g., 2200a and 2200b), and storage devices (e.g., 2300a and 2300b). In addition, the system 2000 may include at least one of an image capturing device 2410, a user input device 2420, a sensor 2430, a communication device 2440, a display 2450, a speaker 2460, a power supplying device 2470, and a connecting interface 2480.

The main processor 2100 may control all operations of the system 2000, more specifically, operations of other components included in the system 2000. The main processor 2100 may be implemented as a general-purpose processor, a dedicated processor, or an AP.

The main processor 2100 may include at least one CPU core 2110 and further include a controller 2120 configured to control the memories 2200a and 2200b and/or the storage devices 2300a and 2300b. In some implementations, the main processor 2100 may further include an accelerator 2130, which is a dedicated circuit for a high-speed data operation, such as an artificial intelligence (AI) data operation. The accelerator 2130 may include a graphics processing unit (GPU), a neural processing unit (NPU) and/or a data processing unit (DPU) and be implemented as a chip that is physically separate from the other components of the main processor 2100.

The memories 2200a and 2200b may be used as main memory devices of the system 2000. Although each of the memories 2200a and 2200b may include a volatile memory, such as static random access memory (SRAM) and/or DRAM, each of the memories 2200a and 2200b may include non-volatile memory, such as a flash memory, PRAM and/or RRAM. The memories 2200a and 2200b may be implemented in the same package as the main processor 2100.

The storage devices 2300a and 2300b may serve as non-volatile storage devices configured to store data regardless of whether power is supplied thereto, and have larger storage capacity than the memories 2200a and 2200b. The storage devices 2300a and 2300b may respectively include storage controllers (STRG CTRL) 2310a and 2310b and NVM (Non-Volatile Memory) 2320a and 2320b configured to store data via the control of the storage controllers 2310a and 2310b. Although the NVMs 2320a and 2320b may include flash memories having a two-dimensional (2D) structure or a three-dimensional (3D) V-NAND structure, the NVMs 2320a and 2320b may include other types of NVMs, such as PRAM and/or RRAM.

The storage devices 2300a and 2300b may be physically separated from the main processor 2100 and included in the system 2000 or implemented in the same package as the main processor 2100. In addition, the storage devices 2300a and 2300b may have types of solid-state devices (SSDs) or memory cards and be removably combined with other components of the system 2000 through an interface, such as the connecting interface 2480 that will be described below. The storage devices 2300a and 2300b may be devices to which a standard protocol, such as a universal flash storage (UFS), an embedded multi-media card (eMMC), or a non-volatile memory express (NVMe), is applied, without being limited thereto.

The image capturing device 2410 may capture still images or moving images. The image capturing device 2410 may include a camera, a camcorder, and/or a webcam.

The user input device 2420 may receive various types of data input by a user of the system 2000 and include a touch pad, a keypad, a keyboard, a mouse, and/or a microphone.

The sensor 2430 may detect various types of physical quantities, which may be obtained from the outside of the system 2000, and convert the detected physical quantities into electric signals. The sensor 2430 may include a temperature sensor, a pressure sensor, an illuminance sensor, a position sensor, an acceleration sensor, a biosensor, and/or a gyroscope sensor.

The communication device 2440 may transmit and receive signals between other devices outside the system 2000 according to various communication protocols. The communication device 2440 may include an antenna, a transceiver, and/or a modem.

The display 2450 and the speaker 2460 may serve as output devices configured to respectively output visual information and auditory information to the user of the system 2000.

The power supplying device 2470 may appropriately convert power supplied from a battery embedded in the system 2000 and/or an external power source, and supply the converted power to each of components of the system 2000.

The connecting interface 2480 may provide connection between the system 2000 and an external device, which is connected to the system 2000 and capable of transmitting and receiving data to and from the system 2000. The connecting interface 2480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

In some implementations, each of the memories 2200a and 2200b may be the host memory 12 described above with reference to FIGS. 1 to 14, and each of the storage devices 2300a and 2300b may be the storage device 1100 described above with reference to FIGS. 1 to 14. The system 2000 may perform a RAID recovery operation, an HMB data updating operation, or a stripe write operation, based on the method described above with reference to FIGS. 1 to 14.

Hereinabove, implementations have been described in the drawings and the specification. Implementations have been described by using the terms described herein, but this has been merely used for describing this disclosure and has not been used for limiting a meaning or limiting the scope of this disclosure defined in the following claims. Therefore, it may be understood by those of ordinary skill in the art that various modifications and other equivalent implementations may be implemented from this disclosure. Accordingly, the scope of this disclosure may be defined based on the scope of the following claims.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations, one or more features from a combination can in some cases be excised from the combination, and the combination may be directed to a sub-combination or variation of a sub-combination.

While this disclosure has been particularly shown and described with reference to implementations thereof, it will be understood that various changes in form and details may be made therein without departing from the scope of the following claims.

## Claims

1. A storage system (1000) comprising:
a memory device (12) including a host memory buffer (13); and
a storage device (1100) including a non-volatile memory device (1300) and a storage controller (1200) configured to manage the host memory buffer (13) and the non-volatile memory device (1300),
wherein the storage controller (1200) is configured to:
read (S110) a codeword including first data from the host memory buffer (13);
perform (S120) an error detection operation and an error correction operation on the first data;
read (S140) a plurality of first codewords each including data included in subset data and a first redundant array of independent disks (RAID) codeword including first RAID parity data from the host memory buffer (13), based on an error of the first data not being corrected; and
recover (S150) the first data, based on the first RAID parity data and the subset data,
wherein the subset data comprises data used along with the first data to generate the first RAID parity data.

2. The storage system (1000) of claim 1, wherein the host memory buffer (13) comprises a data region (DA) configured to store data and a parity region (PA) configured to store RAID parity data.

3. The storage system (1000) of claim 1 or 2, wherein the storage controller (1200) is configured to:
read (S410) a second codeword including second data and a second RAID codeword including second RAID parity data corresponding to the second data from the host memory buffer (13);
perform (S420) an arithmetic operation on third RAID parity data, based on the second data, the second RAID parity data, and third data, wherein the third data is updated data; and
store (S430) a third codeword including the third data and a third RAID codeword including the third RAID parity data in the host memory buffer (13).

4. The storage system (1000) of claim 3, wherein the storage controller (1200) comprises an internal memory configured to store the third data and the third RAID parity data.

5. The storage system (1000) of claim 4, wherein the storage controller (1200) is configured to:
store the third data and the third RAID parity data in the internal memory; and
transfer a response to an external host (10); and
after transferring the response to the external host (10), store the third codeword including the third data and the third RAID codeword including the third RAID parity data in the host memory buffer (13).

6. The storage system (1000) of any preceding claim, wherein the storage controller (1200) is configured to:
read pieces of data from the non-volatile memory device (1300);
perform an arithmetic operation on fourth RAID parity data based on the pieces of data; and
store a plurality of fourth codewords respectively including the pieces of data and a fourth RAID codeword including the fourth RAID parity data in the host memory buffer (13).

7. The storage system (1000) of any preceding claim, wherein the host memory buffer (13) comprises a first data region (DA1), a second data region (DA2), a first parity region (PA1), and a second parity region (PA2).

8. The storage system (1000) of claim 7, wherein the storage controller (1200) is configured to:
store data of a first type in the first data region (DA1) and store RAID parity data of the data of the first type in the first parity region (PA1); and
store data of a second type in the second data region (DA2) and store RAID parity data of the data of the second type in the second parity region (PA2).

9. The storage system (1000) of claim 8, wherein the storage controller (1200) is configured to:
generate the RAID parity data of the data of the first type based on a first RAID scheme; and
generate the RAID parity data of the data of the second type based on a second RAID scheme, wherein the second RAID scheme differs from the first RAID scheme.

10. The storage system (1000) of any preceding claim, wherein the storage controller (1200) is configured to determine a size of a chunk based on a type of data to be stored in the host memory buffer (13), and
wherein the chunk is configured to represent pieces of data used to generate the RAID parity data.

11. An operating method of a storage system (1000), the storage system (1000) including a host memory buffer (13) and a storage device (1100), the storage device (1100) including a storage controller (1200) and a non-volatile memory device (1300), and the operating method comprising:
reading (S110), using the storage controller (1200), a codeword including first data from the host memory buffer (13);
performing (S120), using the storage controller (1200), an error detection operation and an error correction operation;
determining (S130), using the storage controller (1200), that the first data includes an error uncorrectable through the error correction operation;
reading (S140), using the storage controller (1200), a first redundant array of independent disks (RAID) codeword including first (RAID) parity data and a plurality of first codewords respectively including pieces of data included in subset data from the host memory buffer (13), based on the first data including an uncorrectable error; and
recovering (S150), by the storage controller (1200), the first data based on the first RAID parity data and the subset data,
wherein the subset data comprises data used along with the first data to generate the first RAID parity data.

12. The operating method of claim 11, comprising:
storing the codeword including the first data in a data region (DA) of the host memory buffer (13); and
storing the first RAID codeword including the first RAID parity data in a parity region (PA) of the host memory buffer (13).

13. The operating method of claim 11 or 12, comprising:
reading (S410) a second codeword including second data and a second RAID codeword including second RAID parity data from the host memory buffer (13);
performing (S420) an arithmetic operation on third RAID parity data, based on the second data, the second RAID parity data, and third data, wherein the third data is updated data; and
storing (S430) a third codeword including the third data and a third RAID codeword including the third RAID parity data in the host memory buffer (13).

14. The operating method of claim 13, comprising:
storing the third data and the third RAID parity data in an internal memory included in the storage controller (1200);
transferring a response to an external host (10); and
after transferring the response to the external host (10), storing the third codeword including the third data and the third RAID codeword including the third RAID parity data in the host memory buffer (13).

15. The operating method of any one of claims 11 to 14, comprising:
reading pieces of data from the non-volatile memory device (1300);
performing an arithmetic operation on fourth RAID parity data based on the pieces of data; and
storing a plurality of fourth codewords respectively including the pieces of data and a fourth RAID codeword including the fourth RAID parity data in the host memory buffer (13).
